# EUROPEAN PATENT SPECIFICATION

(11) **EP 2 048 120 B1**
(45) Date of publication and mention of the grant of the patent: **11.01.2017**
(21) Application number: 07767614.6
(22) Date of filing: 26.06.2007
(51) Int. Cl.: C03B 37/014

(54) **PROCESS FOR PRODUCING OPTICAL FIBER BASE AND APPARATUS THEREFOR**
VERFAHREN ZUR HERSTELLUNG VON LICHTLEITFASERGRUNDMATERIAL UND VORRICHTUNG DAFÜR
PROCÉDÉ DE PRODUCTION D'UNE PRÉFORME DE FIBRE OPTIQUE ET APPAREIL ASSOCIÉ

(30) Priority: 26.06.2006 JP 2006175712; 21.06.2007 JP 2007164422
(43) Date of publication of application: 15.04.2009
(73) Proprietor: Shin-Etsu Chemical Co., Ltd., Tokyo 100-0004 (JP)
(72) Inventor: INOUE, Dai c/o Shin-Etsu Chemical Co., Ltd., Ibaraki 314-0102 (JP); KOIDE, Hiroyuki c/o Shin-Etsu Chemical Co., Ltd., Ibaraki 314-0102 (JP); NAGAO, Takaaki c/o Shin-Etsu Chemical Co., Ltd., Ibaraki 314-0102 (JP)
(74) Representative: Pfenning, Meinig & Partner mbB
(86) International application number: PCT/JP2007/062808
(87) International publication number: WO 2008/001775

(56) References cited:
- EP-A2- 1 367 028
- JP-A- H0 218 333
- JP-A- S6 418 932
- JP-A- S59 184 736
- JP-A- 2001 139 333
- JP-A- 2001 139 333
- JP-A- 2002 249 342
- JP-A- 2002 249 342
- JP-A- 2003 165 736
- JP-A- 2003 165 736
- JP-A- 2003 212 559
- JP-A- 2003 212 559
- JP-A- 2004 231 482
- JP-A- 2004 231 482
- US-A- 5 749 723

## Description

The present invention relates to a method of manufacturing an optical fiber base material being capable of constantly manufacturing an optical fiber base material of high quality by so-called VAD, and an apparatus of the same.

### BACKGROUND ART

VAD is well-known as a method of manufacturing base materials for optical fibers. This method employs the following apparatus, for example.

In this apparatus, glass particles produced with a core deposition burner and a cladding deposition burner disposed in a reaction chamber; and the glass particles are deposited onto a tip of a starter mounted on a shaft which rotatably lifts up, so that a porous glass base material for optical fiber composed of a core layer and a cladding layer is manufactured. The core layer may be SiO₂ with which GeO₂ is doped, and the cladding layer may be substantially pure SiO₂.

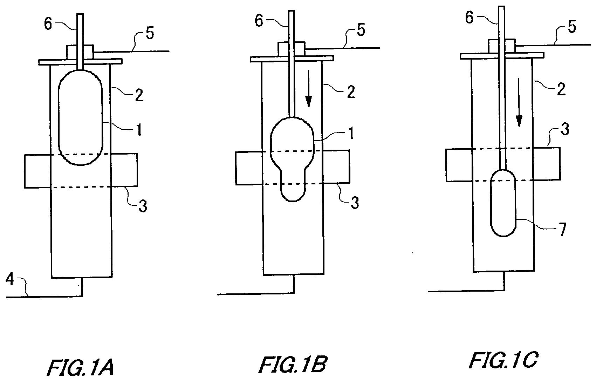

The porous glass base material 1 manufactured as described above is dehydrated and sintered in a heating furnace. The heating furnace has a furnace tube 2 which can be sealed, an electric furnace 3 which heats a part of or the whole of the furnace tube 2, a gas introducing port 4 which introduces any gas into the furnace tube and a gas discharging port 5 which discharges the exhaust gas as shown in Fig.1, for example. Fig. 1A to 1C progressively show vitrifying the porous glass base material. Here, reference numeral 6 indicates a shaft which supports the porous glass base material 1.

Dehydrating is performed by heating the base material at approximately 1,100 degrees Celsius in dehydrating gas composed of such as chlorine, oxygen and helium. Meanwhile, vitrifying is performed by heating the base material at approximately 1,500 degrees Celsius in an atmosphere containing such as helium.

For the furnace tube forming a part of the heating furnace, conventionally a silica tube made of natural quartz has been employed as described in Patent document 1. For example, the silica tube may be a glass tube such as HERALUX-E (trade name), available from Shin-Etsu Quartz Products Co., Ltd., which is made by pulverizing natural quartz and melting by an electric furnace (herein after referred to as a furnace tube of natural quartz ).

The optical fiber base material manufactured as above may be formed as a complete optical fiber base material by adding a cladding to the periphery thereof.

An optical fiber is obtained by drawing the optical fiber base material manufactured as above, and is provided for optical signal transmission. For example, light having a wavelength of 1,310 nm and 1,550 nm is modulated and transmitted through a single-mode fiber.
Patent document 1: Japanese Patent Application Publication No.2004-002109

JP 2002 243342 A1 discloses a method of making a glass tube for use as a optical fibre perform sintering furnace tube. The tube is made of oxynitride SiO₂ glass containing halogen. The silicea glass is synthesized from a gas phase reaction of e.g. SiCl1 in a flame, depositing particles on a substrate. The synthetic quartz soot body is then heat treated. The dehydration furnace tube is used in a standard sintering process for manufacturing an optical fibre from a porous perform entailing use of dehydration gas and inert gas in the tube to dehydrate and finally sinter the porous perform.

JP 2001 139333 A discloses a method of making a glass tube for use as a optical fibre perform sintering furnace tube. The tube is made of SiO₂ glass synthesised from a gas phase VAD reaction of e.g. SiCl4 in a flame, depositing particles on a substrate. The synthetic quartz soot body is then heat treated, and the solid body is reshaped to a tube. The dehydration furnace tube is used in a standard sintering process for manufacturing an optical fibre from a porous perform entailing use of dehydration gas and inert gas in the tube to dehydrate and finally sinter the porous perform.

JP 02018333 A describes the formation of a high purity glass layer on the inside of a core tube made of quartz glass by a vapour phase reaction. A porous base material for an optical fiber is heat-treated in the tube. Even when the inside of the tube is etched by a gaseous fluorine compound, no impurities are generated in the atmosphere. Thus, impurities are prevented from entering the base material.

JP S64 18932 A defines a composite natural quartz furnace tube with an internal layer of high purity synthetic quartz, covering an area larger than the intended area to be heated.

JP 59 184736 A shows a method for transforming an optical porous glass to transparent glass by using a furnace core pipe comprising an opaque quartz pipe having a high purity quartz glass layer laminated on its inner peripheral face.

US 5 749 723 describes a heat treatment apparatus for oxidation and diffusion comprising a reaction tube, the interior of which is heated up to a temperature of about 1.200°C. The inside surface of the tube is made of synthetic quartz glass, whose contents of heavy metals are lower by a factor of 10² than those of molten quartz glass. These amounts of heavy metals released from the reaction tube into a heat treatment atmosphere are substantially zero.

### DISCLOSURE OF THE INVENTION

### PROBLEMS TO BE SOLVED BY THE INVENTION

Usually, the transmission loss of the optical fiber at the wavelength of 1,310 nm is about 0.32 to 0.34 dB/km, however, it could infrequently become higher than usual, such as about 0.34 to 0.36 dB/km. In most cases, the transmission loss of the optical fiber at the wavelength of 1,550 nm is not very much higher than a normal value. Moreover, when transmission losses for a wide wavelength range, such as 900 nm to 1,600 nm are examined, the shorter the wavelength is, the larger the transmission loss is. Conventionally, such transmission loss has been acceptable, however, the market strictly requests for an optical characteristic in recent years, therefore, such transmission loss has come under a problem.

An object of the present invention is to provide a method of manufacturing an optical fiber base material being capable of reducing an occurrence of the situation described above that the transmission loss for a short wavelength region, particularly equal to or less than 1,310 nm, is larger, and an apparatus for the same.

### MEANS FOR SOLVING THE PROBLEMS

The present invention is provided to solve the above described problem. It is defined by a method comprising the features of claim 1 and an apparatus comprising the features of claim 5. Preferred embodiments of this method and this apparatus are represented by the corresponding dependent claims.

The method of manufacturing an optical fiber base material according to the invention, comprising: forming a porous glass base material by depositing glass particles; providing a vessel that has a portion made of synthetic quartz glass containing sodium, potassium, lithium, magnesium, copper, iron, calcium, and aluminum at levels equal to or less than 0.01 ppm, the synthetic quartz portion formed by melting a soot deposit, the soot deposit being formed by depositing glass particles which are produced by hydrolyzing silicide with oxyhydrogen flame, and wherein the vessel has another portion made of natural quartz glass; introducing dehydration reaction gas and inert gas into the vessel; heating the vessel, at the portion made of synthetic quartz glass, that contains the dehydration reaction gas and the inert gas; and inserting the porous glass base material into the heated vessel to dehydrate and sinter the porous glass base material, wherein the impurity level of the synthetic quartz glass is such that an optical fiber drawn from said optical fiber base material, when manufactured, has a transmission loss at 1310 nm of less than 0.34 dB/km; and wherein, during the step of inserting, a total amount of time over which the portion of the vessel made of synthetic quartz glass is subjected to a temperature exceeding 1,400 degrees Celsius is within a time period over which a glass layer is entirely crystallized in the depthwise direction in the portion of the vessel made of synthetic quartz glass.

The apparatus according to the invention that dehydrates and sinters a porous glass base material for the manufacture of an optical fiber, comprises: a vessel as a furnace tube which forms a part of the apparatus, a portion of the vessel being made of synthetic quartz glass, containing sodium, potassium, lithium, magnesium, copper, iron, calcium, and aluminum at levels equal to or less than 0.01 ppm, which is formed by melting a soot deposit, the soot deposit being formed by depositing glass particles which are produced by hydrolyzing silicide with oxyhydrogen flame, and wherein the vessel has another portion made of natural quartz glass; and a heat source configured to heat the portion of the vessel made of the synthetic quartz glass, wherein the impurity level of the synthetic quartz glass is such that said optical fiber, when manufactured, has a transmission loss at 1310 nm of less than 0.34 dB/km, and wherein the vessel has a thickness such that a total amount of time over which the portion of the vessel made of synthetic quartz glass is subjected to a temperature exceeding 1,400 degrees Celsius by the heat source is within a time period over which a glass layer is entirely crystallized in the depthwise direction in the portion of the vessel made of synthetic quartz glass.

### EFFECT OF THE INVENTION

According to the present invention, since a synthetic quartz glass vessel is used as a furnace tube, impurities from a furnace tube material are not discharged into the furnace tube, so that an optical fiber base material having an excellent optical characteristic can be constantly manufactured. Moreover, by drawing the optical fiber base material, an optical fiber having a low transmission loss can be obtained.

### BRIEF DESCRIPTION OF THE DRAWINGS

Fig.1A to 1C are schematic views progressively explaining a step of vitrifying a porous glass base material.
Fig.2 shows a distribution of transmission losses for optical fibers at a wavelength of 1,310 nm, which are obtained by using a furnace tube of synthetic quartz and a furnace tube of natural quartz.

### BEST MODE FOR CARRYING OUT THE INVENTION

Some aspects of the invention will now be described based on the embodiments, which do not intend to limit the scope of the present invention, but exemplify the invention. All of the features and the combinations thereof described in the embodiment are not necessarily essential to the invention.

As the result of repeated reviews in order to solve the above described problem, it has been considered that increase of the transmission loss is caused by contaminating the optical fiber base material with impurities such as a very small amount of Fe which are contained in the conventional natural quartz forming a furnace tube. In addition, it has been considered that increase of the transmission loss is caused by contaminating the optical fiber base material in the furnace tube with a metal forming a furnace or a metal contained in carbon which diffuses and transmits through the tube wall due to corrosion.

More specifically, it is considered that increase of the transmission loss is caused by the following mechanism. That is, the natural quartz furnace tube is progressively crystallized (into cristobalite) while it is used at a high temperature such as approximately 1,400 degrees Celsius. The crystallization starts with impurities and crystallite as a core, which are contained in the natural quartz. After several hundred hours, most of the heated region is crystallized. It is considered that a small amount of impurities such as Fe contained in the natural quartz separate out and diffuse in a crystal grain boundary during the crystallization. The diffusion rate of the impurities in the crystal grain boundary is very much faster than a rate at which the impurities diffuse in amorphous glass.

Therefore, in comparison with a state before crystallization, impurities such as Fe are easily discharged from the crystallized natural quartz furnace tube into the interior thereof. A part of the impurities which were discharged into the furnace tube is taken into the optical fiber base material and causes fluctuation of the density of glass, so that Rayleigh scattering increases. It is known that optical loss due to Rayleigh scattering is in proportion to 1/λ⁴, where λ indicates a wavelength of light. Thus, the phenomenon that the shorter the wavelength is, the larger the loss is, can be explained by the above described mechanism.

Therefore, a furnace tube is produced by using vitrified synthetic quartz, which is obtained by hydrolyzing silicide such as SiCl₄, (CH₃)SiCl₃, (CH₃)₂SiCl₂ with oxyhydrogen flame to form a soot deposit, and melting the soot deposit in a heating furnace.

When Fe is taken as an example, the concentration of the impurities contained in the synthetic quartz tube which is produced by using such high-purity material is equal to or less than 0.01 ppm. Meanwhile, it is difficult for the conventional natural quartz to completely eliminate impurities in the material, and the natural quartz contains Fe of approximately 0.1ppm as impurities. An example of analysis of metal impurities contained in the raw material is shown in Table 1 below.

**Table 1:**

| | Metal impurities (ppm) | | | | | | | | hydroxy group |
|---|---|---|---|---|---|---|---|---|---|
| | Na | K | Li | Mg | Cu | Fe | Ca | A1 | |
| Natural quartz | 0.3 | 0.4 | 0.6 | 0.05 | <0.05 | 0.1 | 0.5 | 15 | 20 |
| synthetic quartz | <0.01 | <0.01 | <0.01 | <0.01 | <0.01 | <0.01 | <0.01 | <0.01 | <1 |

The synthetic quartz made ef from a high-purity silicide as the raw material contains little impurity and crystallite. Accordingly, even if the synthetic quartz is used under a high temperature, the crystallization very slowly progresses in comparison with the natural quartz. Accordingly, the synthetic quartz contains little impurity, and a path through which impurities diffuse is not formed therein over the long term. Therefore, when the synthetic quartz having such a feature is used as a furnace tube, it is considered that discharge of impurities into the furnace tube scarcely occur. Therefore, an optical fiber base material which is manufactured by using the furnace tube of synthetic quartz according to the mechanism described above can significantly reduce a risk of increasing the transmission loss in comparison with the conventional one.

Under a use environment intended for the present invention, crystallization of the synthetic quartz progresses by about 1 mm for 1,500 hours. Therefore, in a period obtained by multiplying the thickness of the synthetic quartz by 1,500 hours, a state in which the glass layer remains is maintained even if the synthetic quartz are used at a temperature equal to or more than 1,400 degrees Celsius, so that a risk of contaminating the optical fiber base material can be reduced.

Here, at least a part of the furnace tube must be made of the synthetic quartz. Specifically, the part which is heated at a high temperature by a heat source such as an electric furnace must be made of the synthetic quartz. Even if the other part is made of the natural quartz, the effect of the invention is not hurt.

In addition, it is not directly related to the object of the present invention, however, the synthetic quartz used in the embodiment contains little hydroxy group equal to or less than 1 ppm. Therefore, in view of the description of Patent document 1 that moisture contained in the furnace tube adversely affects the loss characteristic of the optical fiber around the wavelength of 1,380 nm, the synthetic quartz of the embodiment can be used for manufacturing the optical fiber containing little hydroxy group of which demand has rapidly grown in recent years without any problem although the furnace tube is manufactured by a method different from that of Patent document 1. The step of eliminating adsorption moisture described as Patent document 1 is applicable to the synthetic quartz furnace tube which is used in the present invention as well.

Embodiment 1 For the sake of comparison, the porous glass base material which is deposited by VAD is separated into a first furnace tube of synthetic quartz and a second furnace tube of natural quartz, each of which thickness of the wall is 4mm. Then, each furnace tube is dehydrated and sintered. Further, a cladding is added to each dehydrated and sintered base material, and the base material with the cladding is vitrified, so that an optical fiber base material is obtained. The obtained optical fiber base materials are drawn respectively to measure the transmission loss at the wavelength of 1,310 nm, and then, a distribution of losses are compared. The measured optical fibers are obtained by drawing the optical fiber base materials which are manufactured around the same time, of which 177 fibers are manufactured with the furnace tube of synthetic quartz and of which 1,059 fibers are manufactured with the furnace tube of natural quartz.

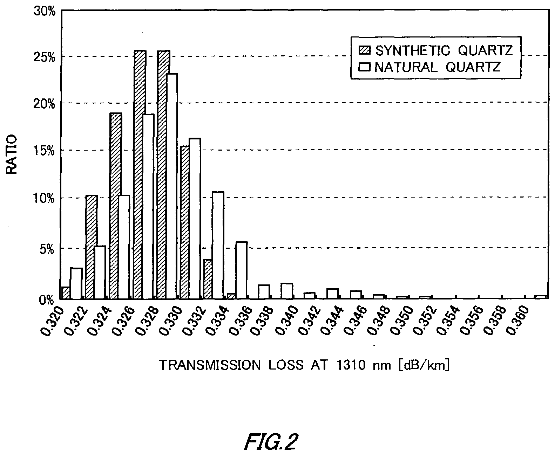

As shown in Fig.2, among the optical fibers made by the furnace tube of natural quartz, 4% of those have the transmission loss more than 0.34 dB/km. Meanwhile, no optical fiber made by the furnace tube of synthetic quartz have the transmission loss more than 0.34 dB/k.

Here, the furnace tube of synthetic quartz is taken out upon exceeding 6,000 hours over which the furnace tube of synthetic quartz is subjected to a high temperature more than 1,400 degrees Celsius, and the heated portion is examined. The result is that the glass layer is totally eliminated and entirely crystallized in a large part.

The manufacturing method and the manufacturing apparatus according to the present invention may be provided in another embodiment. That is, in a manufacturing method and a manufacturing apparatus for an optical fiber base material, a vessel which accommodates a porous glass base material is made of synthetic quartz glass, which contains metal impurities less than those in the natural quartz glass. It is preferable that the content of the metal impurities of the synthetic quartz glass is equal to or less than one-tenth of those of the natural quartz glass.

### INDUSTRIAL APPLICABILITY

According to the present invention, an optical fiber with a low transmission loss can be obtained.

## Claims

1. A method of manufacturing an optical fiber base material, comprising:
forming a porous glass base material (1) by depositing glass particles;
providing a vessel (2) that has a portion made of synthetic quartz glass containing sodium, potassium, lithium, magnesium, copper, iron, calcium, and aluminum at levels equal to or less than 0.01 ppm, the synthetic quartz portion formed by melting a soot deposit, the soot deposit being formed by depositing glass particles which are produced by hydrolyzing silicide with oxyhydrogen flame, and wherein the vessel (2) has another portion made of natural quartz glass;
introducing dehydration reaction gas and inert gas into the vessel (2);
heating the vessel (2), at the portion made of synthetic quartz glass, that contains the dehydration reaction gas and the inert gas; and
inserting the porous glass base material (1) into the heated vessel (2) to dehydrate and sinter the porous glass base material (1),
wherein the impurity level of the synthetic quartz glass is such that an optical fiber drawn from said optical fiber base material, when manufactured, has a transmission loss at 1310 nm of less than 0.34 dB/km; and
wherein, during the step of inserting, a total amount of time over which the portion of the vessel (2) made of synthetic quartz glass is subjected to a temperature exceeding 1,400 degrees Celsius is within a time period over which a glass layer is entirely crystallized in the depthwise direction in the portion of the vessel (2) made of synthetic quartz glass.

2. The method according to Claim 1, wherein the silicide includes any of SiCl4, (CH3)SiCl3, (CH3)2SiCl2 or a mixed compound thereof.

3. The method according to Claim 1, wherein the portion made of synthetic quartz glass of the vessel (2) is larger than an area heated by at least a heat source (3) in the heating.

4. The method according to Claim 1, wherein in the dehydrating and sintering, a total amount of time over which the portion made of synthetic quartz glass is subjected to a temperature exceeding 1,400 degrees Celsius is within a time period obtained by multiplying a thickness in mm of the synthetic quartz glass of the vessel (2) by 1,500 hours.

5. An apparatus that dehydrates and sinters a porous glass base material (1) for the manufacture of an optical fiber, comprising:
a vessel (2) as a furnace tube which forms a part of the apparatus, a portion of the vessel (2) being made of synthetic quartz glass, containing sodium, potassium, lithium, magnesium, copper, iron, calcium, and aluminum at levels equal to or less than 0.01 ppm, which is formed by melting a soot deposit, the soot deposit being formed by depositing glass particles which are produced by hydrolyzing silicide with oxyhydrogen flame, and wherein the vessel (2) has another portion made of natural quartz glass; and
a heat source (3) configured to heat the portion of the vessel (2) made of the synthetic quartz glass,
wherein the impurity level of the synthetic quartz glass is such that said optical fiber, when manufactured, has a transmission loss at 1310 nm of less than 0.34 dB/km,
wherein the vessel (2) has a thickness such that a total amount of time over which the portion of the vessel (2) made of synthetic quartz glass is subjected to a temperature exceeding 1,400 degrees Celsius by the heat source (3) is within a time period over which a glass layer is entirely crystallized in the depthwise direction in the portion of the vessel (2) made of synthetic quartz glass.

6. The apparatus according to Claim 6, wherein the silicide includes any of SiCl4, (CH3)SiCl3, (CH3)2SiCl2 or a mixed compound thereof.

7. The apparatus according to Claim 6, wherein the portion made of the synthetic quartz glass of the vessel (2) is larger than an area to be heated by the heat source (3).

## Patentansprüche

1. Verfahren zum Herstellen eines Basismaterials für eine optische Faser, welches aufweist:
Bilden eines Basismaterials (1) aus porösem Glas durch Aufbringen von Glasteilchen;
Bereitstellen eines Gefäßes (2), das einen Bereich hat, der aus synthetischem Quarzglas besteht, das Natrium, Kalium, Lithium, Magnesium, Kupfer, Eisen, Calcium und Aluminium in Mengen gleich oder geringer als 0,01 ppm enthält, wobei der synthetische Quarzbereich gebildet ist durch Schmelzen eines Rußniederschlags, wobei der Rußniederschlag gebildet ist durch Aufbringen von Glasteilchen, die durch Hydrolysieren von Silicid mit einer Knallgasflamme erzeugt wurden, und wobei das Gefäß (2) einen anderen Bereich hat, der aus natürlichem Quarzglas besteht;
Einführen von Dehydratisierungs-Reaktionsgas und inertem Gas in das Gefäß (2);
Erwärmen des Gefäßes (2) in dem aus synthetischem Quarzglas bestehenden Bereich, das das Dehydratisierungs-Reaktionsgas und das inerte Gas enthält; und
Einführen des Basismaterials (1) aus porösem Glas in das erwärmte Gefäß (2), um das Basismaterial (1) aus porösem Glas zu dehydratisieren und zu sintern,
wobei der Verunreinigungsgrad des synthetischen Quarzglases derart ist, dass eine aus dem Basismaterial für optische Fasern gezogene optische Faser, wenn sie hergestellt ist, einen Übertragungsverlust bei 1310 nm von weniger als 0,34 dB/km hat; und
wobei während des Schrittes des Einführens eine Gesamtzeit, während derer der Bereich des Gefäßes (2), der aus synthetischem Quarzglas besteht, einer Temperatur, die 1400 °C überschreitet, ausgesetzt wird, innerhalb einer Zeitperiode ist, während deren eine Glasschicht in der Tiefenrichtung in dem Bereich des Gefäßes (2), der aus synthetischem Quarzglas besteht, vollständig kristallisiert wird.

2. Verfahren nach Anspruch 1, bei dem das Silicid irgendeines von SiCl4, (CH3)SiCl3, (CH3)2SiCl2 oder eine Mischung von diesen enthält.

3. Verfahren nach Anspruch 1, bei dem der aus synthetischem Quarzglas bestehende Bereich des Gefäßes (2) größer als eine Fläche ist, die durch zumindest eine Heizquelle (3) während des Erwärmens erwärmt wird.

4. Verfahren nach Anspruch 1, bei dem bei der Dehydratisierung und Sinterung eine Gesamtzeit, während deren der aus synthetischem Quarzglas bestehende Bereich einer Temperatur, die 1400°C überschreitet, ausgesetzt wird, innerhalb einer Zeitperiode ist, die durch Multiplizieren einer Dicke in mm des synthetischen Quarzglases des Gefäßes (2) mit 1500 Stunden erhalten wird.

5. Vorrichtung, die ein Basismaterial (1) aus porösem Glas für die Herstellung einer optischen Faser dehydratisiert und sintert, aufweisend:
ein Gefäß (2) als ein Ofenrohr, das einen Teil der Vorrichtung bildet, wobei ein Teil des Gefäßes (2) aus synthetischem Quarzglas besteht, das Natrium, Kalium, Lithium, Magnesium, Kupfer, Eisen, Calcium und Aluminium in einer Menge gleich oder weniger als 0,01 ppm enthält und das durch Schmelzen eines Rußniederschlags gebildet ist, wobei der Rußniederschlag durch Niederschlagen von Glasteilchen gebildet ist, die durch Hydrolysieren von Silicid mit einer Wasserstoff-Sauerstoff-Flamme erzeugt sind, und wobei das Gefäß (2) einen anderen Bereich hat, der aus natürlichem Quarzglas besteht; und
eine Heizquelle (3), die konfiguriert ist zum Erwärmen des aus dem synthetischen Quarzglas bestehenden Bereichs des Gefäßes (2),
wobei der Verunreinigungsgrad des synthetischen Quarzglases derart ist, dass die optische Faser, wenn sie hergestellt ist, einen Übertragungsverlust bei 1.300 nm von weniger als 0,34 dB/km hat,
wobei das Gefäß (2) eine Dicke derart hat, dass eine Gesamtzeit, während deren der aus dem synthetischen Quarzglas bestehende Bereich des Gefäßes (2) durch die Heizquelle (3) einer Temperatur ausgesetzt wird, die 1400 °C überschreitet, innerhalb einer Zeitperiode ist, während deren eine Glasschicht in der Tiefenrichtung in dem aus synthetischem Quarzglas bestehenden Bereich des Gefäßes (2) vollständig kristallisiert wird.

6. Vorrichtung nach Anspruch 5, bei der das Silicid irgendeines von SiCl4, (CH3) SiCl3, (CH3)2SiCl2 oder eine Mischung von diesen enthält.

7. Vorrichtung nach Anspruch 5, bei der der aus dem synthetischen Quarzglas bestehende Bereich des Gefäßes (2) größer als eine Fläche ist, die von der Heizquelle (3) zu erwärmen ist.

## Revendications

1. Procédé de fabrication d'un matériau de base de fibre optique, comprenant:
la formation d'un matériau de base en verre poreux (1) en déposant des particules de verre;
la fourniture d'un récipient (2) qui comporte une partie réalisée en verre de quartz synthétique contenant du sodium, du potassium, du lithium, du magnésium, du cuivre, du fer, du calcium et de l'aluminium à des niveaux égaux ou inférieurs à 0,01 ppm, la partie en verre de quartz synthétique étant formée en fondant un dépôt de suie, le dépôt de suie étant formé en déposant des particules de verre qui sont produites par hydrolyse de siliciure à l'aide d'une flamme oxhydrique, et dans lequel le récipient (2) comporte une autre partie réalisée en verre de quartz naturel;
l'introduction d'un gaz de réaction de déshydratation et d'un gaz inerte à l'intérieur du récipient (2);
le chauffage du récipient (2), au niveau de la partie réalisée en verre de quartz synthétique, qui contient le gaz de réaction de déshydratation et le gaz inerte; et
l'insertion du matériau de base en verre poreux (1) à l'intérieur du récipient chauffé (2) afin de déshydrater et de fritter le matériau de base en verre poreux (1), dans lequel:
le niveau d'impuretés du verre de quartz synthétique est tel qu'une fibre optique étirée à partir dudit matériau de base de fibre optique, lorsqu'elle est fabriquée, présente une perte de transmission à 1310 nm inférieure à 0,34 dB/km; et dans lequel:
pendant l'étape d'insertion, une durée temporelle totale pendant laquelle la partie du récipient (2) réalisée en verre de quartz synthétique est soumise à une température excédant 1 400 degrés Celsius s'inscrit à l'intérieur d'une période temporelle pendant laquelle une couche en verre est entièrement cristallisée dans la direction de sa profondeur dans la partie du récipient (2) réalisée en verre de quartz synthétique.

2. Procédé selon la revendication 1, dans lequel le siliciure inclut un corps quelconque pris parmi SiCl4, (CH3)SiCl3, (CH3)2SiCl2 ou un composé mixte afférent.

3. Procédé selon la revendication 1, dans lequel la partie réalisée en verre de quartz synthétique du récipient (2) est plus grande qu'une aire chauffée par au moins une source de chaleur (3) lors du chauffage.

4. Procédé selon la revendication 1, dans lequel, lors de la déshydratation et du frittage, une durée temporelle totale pendant laquelle la partie réalisée en verre de quartz synthétique est soumise à une température excédant 1400 degrés Celsius s'inscrit à l'intérieur d'une période temporelle obtenue en multipliant une épaisseur en mm du verre de quartz synthétique du récipient (2) par 1 500 heures.

5. Appareil qui déshydrate et fritte un matériau de base en verre poreux (1) pour la fabrication d'une fibre optique, comprenant:
un récipient (2) en tant que tube foyer qui forme une portion de l'appareil, une partie du récipient (2) étant réalisée en verre de quartz synthétique contenant du sodium, du potassium, du lithium, du magnésium, du cuivre, du fer, du calcium et de l'aluminium à des niveaux égaux ou inférieurs à 0,01 ppm, laquelle partie est formée en fondant un dépôt de suie, le dépôt de suie étant formé en déposant des particules de verre qui sont produites par hydrolyse de siliciure à l'aide d'une flamme oxhydrique, et dans lequel le récipient (2) comporte une autre partie réalisée en verre de quartz naturel ; et
une source de chaleur (3) configurée de manière à chauffer la partie du récipient (2) réalisée en verre de quartz synthétique, dans lequel : le niveau d'impuretés du verre de quartz synthétique est tel que ladite fibre optique, lorsqu'elle est fabriquée, présente une perte de transmission à 1310 nm inférieure à 0,34 dB/km ; et dans lequel :
le récipient (2) présente une épaisseur qui est telle qu'une durée temporelle totale pendant laquelle la partie du récipient (2) réalisée en verre de quartz synthétique est soumise à une température excédant 1 400 degrés Celsius par la source de chaleur (3) s'inscrit à l'intérieur d'une période temporelle pendant laquelle une couche en verre est entièrement cristallisée dans la direction de sa profondeur dans la partie du récipient (2) réalisée en verre de quartz synthétique.

6. Appareil selon la revendication 5, dans lequel le siliciure inclut un corps quelconque pris parmi SiCl4, (CH3)SiCl3, (CH3)2SiCl2 ou un composé mixte afférent.

7. Appareil selon la revendication 6, dans lequel la partie réalisée en verre de quartz synthétique du récipient (2) est plus grande qu'une aire destinée à être chauffée par la source de chaleur (3).
